# EUROPEAN PATENT APPLICATION

(11) **EP 4 556 373 A1**
(43) Date of publication of application: **21.05.2025**
(21) Application number: 23210183.2
(22) Date of filing: 15.11.2023
(51) Int. Cl.: B64D 37/32, F16F 7/12, B64C 1/06, B64D 37/02, B64D 37/30

(54) **CRASH-LOAD ABSORBING ATTACHMENT FITTING AND AIRCRAFT OR SPACECRAFT COMPRISING THE SAME**

(71) Applicant: Airbus Operations GmbH, 21129 Hamburg (DE)
(72) Inventor: Wölcken, Piet Christof, 21129 Hamburg (DE)
(74) Representative: Isarpatent

(57) **Abstract**

The present invention relates to a crash-load absorbing attachment fitting (1; 101; 201; 301; 401), comprising a first and second part (3, 6; 103, 106; 203, 206; 303, 306; 403, 406) that are joined to each other at a joint (10; 110; 210; 310; 410), the first and second parts being load-bearing parts. The joint is configured such that the joint is capable of transferring, during normal use of the crash-load absorbing attachment fitting, a load (F) which is below a pre-determined load-absorption activation threshold value between the first and second parts, and such that the joint breaks when the load reaches or exceeds the pre-determined load-absorption activation threshold value. The crash-load absorbing attachment fitting further comprises a destroyer device (15; 115; 215; 315; 415), wherein the destroyer device is rigidly connected to and/or rigidly supported by one of the first and second parts and wherein the destroyer device is arranged so as to be capable of destructively acting on the other one of the first and second parts after breaking of the joint. Moreover, the invention proposes an aircraft or spacecraft (91) comprising a tank for storing hydrogen, in particular liquefied hydrogen, and at least one such crash-load absorbing attachment fitting (1; 101; 201; 301; 401), the tank being attached to a structural member (78) of the aircraft or spacecraft using the crash-load absorbing attachment fitting.

## Description

### TECHNICAL FIELD OF THE INVENTION

The present invention relates to a crash-load absorbing attachment fitting, for example for attaching a hydrogen tank in an aircraft or spacecraft. Moreover, the invention relates to an aircraft or spacecraft comprising at least one such crash-load absorbing attachment fitting.

### TECHNICAL BACKGROUND

Although the invention may be useful in a variety of applications in many fields of technology, the invention and the underlying problem initially will be described in the following in greater detail and exemplary manner in relation to storage of hydrogen in a hydrogen-powered aircraft, but without limiting the invention to that effect.

Hydrogen-based propulsion of aircraft has recently been proposed, in order to reduce emissions by air travel, in particular emissions of carbon dioxide. Hydrogen may be stored within the aircraft in a tank, e.g. as cryogenic liquid hydrogen.

For safety reasons, it may be desirable to avoid significant damage to such a tank, especially puncturing or fracturing thereof, in crash scenarios such as e.g. a crash landing. Also, besides the protection of such a hydrogen tank, it may be desirable to avoid in such a crash scenario damage to other components or devices, especially components or devices that require careful treatment.

CFRP (carbon fibre reinforced plastic) crash absorbers as such have been conceptualized, designed, manufactured and tested for over a decade although their utilization as a dedicated functional part is rather limited to date. Principal underlying concepts as to the crash load absorption capabilities of CFRP are a standard design feature in racing cars and in aircraft with a significant amount of CFRP structural members. Existing CFRP crash absorber concepts are typically focussed on the reduction of crash loads experienced by passengers or pilots.

DE 10 2013 113 396 A1 and US 2015 0 151 828 A1 for example describe an aircraft fuselage including a passenger cabin and a cargo hold below the passenger cabin. An outer skin of the fuselage is stiffened by a backing structure. The backing structure in the cargo hold comprises at least two lateral quasi joints above a cargo-hold floor framework and at least one further quasi-joint below the cargo-hold floor framework. Energy absorption devices acting in the transverse direction of the fuselage are arranged in the cargo hold for absorbing tensile loads.

Further, in EP 2 886 905 A1, tensile energy absorbers for a lightweight structure, in particular for aircraft, spacecraft, watercraft and land vehicles, are described. It is described to provide a tensile energy absorber with a central portion for absorbing kinetic energy and with two attachment regions for mechanical attachment to the lightweight structure, wherein the attachment regions each adjoin the central portion on the end sides. Further, EP 2 886 905 A1 describes such a tensile energy absorber in which the central portion is made from a fibre-plastic composite.

### SUMMARY OF THE INVENTION

A problem to be solved by the invention is to propose an improved way of mounting or attaching a component or device, for example a hydrogen tank, such that loads acting on that component or device are effectively limited, for example in a scenario such as a crash landing of an aircraft. Furthermore, it is a problem to be solved by the invention to provide an aircraft or spacecraft including a hydrogen tank which is effectively protected against significant damage in certain crash scenarios, such as a crash landing.

One or more of these problems is/are solved by a crash-load absorbing attachment fitting having the features of claim 1 and/or by an aircraft or spacecraft having the features of claim 15.

Accordingly, a crash-load absorbing attachment fitting, comprising a first part and a second part that are joined to each other at a joint, is proposed. The first and second parts are load-bearing parts. The joint is configured such that the joint is capable of transferring, during normal use of the crash-load absorbing attachment fitting, a load which is below a pre-determined load-absorption activation threshold value between the first and second parts. Furthermore, the joint is configured such that the joint breaks when the load reaches or exceeds the pre-determined load-absorption activation threshold value. The crash-load absorbing attachment fitting further comprises a destroyer device, wherein the destroyer device is rigidly connected to and/or rigidly supported by one of the first and second parts and wherein the destroyer device is arranged so as to be capable of destructively acting on the other one of the first and second parts after breaking of the joint.

Further, the invention proposes an aircraft or spacecraft comprising a tank for storing hydrogen, in particular liquefied hydrogen, and at least one crash-load absorbing attachment fitting according to the invention. In the aircraft or spacecraft provided by the invention, the tank is attached to a structural member of the aircraft or spacecraft using the crash-load absorbing attachment fitting.

It is an idea of the invention to effectively use the crash-load absorbing element as a dedicated functional part of an attachment fitting, this functional part being configured to transmit loads in a situation of normal use. Further, it is an idea of the invention to activate the crash-load absorption function in a defined manner, in particular at a precisely defined load or within a well-defined, narrow load range, within the attachment fitting itself. For the purpose of activation, the joint provides a pre-determined breaking point. In this manner, the crash-load absorbing attachment fitting proposed by the invention is a self-contained attachment device that can be used in facilitated manner e.g. within an aircraft or spacecraft. The extension of the crash absorption concept also to non-living systems, such as a tank, e.g. a hydrogen tank, or a complex tank structure, makes it possible to achieve high safety of such systems and at the same time can enable significant reductions in total weight and cost. However, it should be understood that the invention is not limited to the use of the crash-load absorbing attachment fitting for protecting non-living systems.

Advantageous developments and improvements of the invention are contained in the dependent claims as well as in the description referring to the drawings.

In a preferred development, the first part and/or second part is/are made with a fibre-reinforced composite material, in particular a fibre-reinforced composite material comprising a thermoplastic matrix.

More preferably, at least the other one of the first and second parts on which the destroyer device is capable of destructively acting is made with a fibre-reinforced composite material, in particular a fibre-reinforced composite material comprising a thermoplastic matrix.

Even more preferably, both the first and second parts are each made with a fibre-reinforced composite material, in particular a fibre-reinforced composite material comprising a thermoplastic matrix.

A fibre-reinforced composite material is capable of consuming considerable amounts of kinetic energy during destruction thereof. Moreover, fibre-reinforced composite materials enable the manufacturing of a lightweight attachment fitting that is adapted to support considerable load during normal use.

The utilization of a fibre-reinforced composite material having a thermoplastic matrix, e.g. of a carbon fibre-reinforced plastic with thermoplastic matrix, enables the manufacture of the crash-absorbing attachment fitting using welding technologies. In this way, complex monolithic parts with one or more precisely tuned failure location(s) which break(s) under pre-determined loads, activating the crash-load absorption only once these pre-determined conditions are experienced in service, can be manufactured.

In a development, the destroyer device is formed with at least one destroyer element, in particular several destroyer elements, capable of cutting and/or splitting the other one of the first and second parts. This can help to enable a strongly energy-consuming and preferably substantially continuous, smooth destruction of the other one of the first and second parts on which the destroyer device acts.

The destroyer element(s) is or are each formed as or with a prismatoid, in particular as or with a prism or a frustum of pyramid. Further, in particular, the destroyer element(s) may each be formed as or with a prism having a quadrangular base, for example a square or rhombic base, or as or with a frustum of pyramid having a quadrangular base, for example a square or rhombic base. The destroyer element(s) may each be formed as or with a cuboid shape. Such shapes can contribute to a defined, continuous disintegration of material, e.g. of a part made from a fibre-reinforced plastic composite, with desirably high consumption of energy.

In a development, the first and second parts are arranged so as to be slidably guided along each other for movement of the first and second parts relative to each other after breaking of the joint. The destructive action of the destroyer device, and thus the energy consumption after activation of the crash-load absorption function of the attachment fitting, can in this manner be controlled well within such a self-contained attachment fitting.

Preferably, the joint is formed as a welded connection. This may be expedient, in particular, for forming the attachment fitting with thermoplastic fibre composite material. Thermoplastic welding in particular offers operational, cost and weight benefits. For example, the crash-load absorbing attachment fitting formed with a fibre reinforced composite material, in particular having a thermoplastic matrix, may be manufactured with a very high degree of automation. In particular, such highly automated manufacturing can be further promoted by a relatively simple design of the fitting, preferably along with standardization. Also, the characteristics and parameters of a welding technique used to form the joint can be controlled and can be used to yield a joint that fails at a precisely defined load.

In a development, the joint comprises at least one welded spot, preferably several welded spots. The welded spot or spots may in particular be formed by ultrasonic spot welding. Ultrasonic welding, for example, is well suited for forming such welded spots. The use of other welding techniques to form the welded spots may, however, be envisaged, too. For example, alternatively, the welded spot(s) may be formed by resistance welding or by induction welding. Resistance welding and induction welding are each well adapted to forming the spot(s), too. In particular, using ultrasonic spot welding, resistance welding or induction welding, the welding result, in particular its geometry and strength, is well controllable. For example, using these welding methods, the formation of the joint zone can be well controlled.

In accordance with an alternative development, instead of a welded connection, the joint may be formed with at least one connecting element connecting the first and second parts and configured to fail when the load reaches or exceeds the pre-defined load absorption activation threshold value. The connecting element(s) may e.g. be configured as or with (a) shear bolt(s), e.g. rivet-type shear bolt(s).

In accordance with another alternative development, instead of a welded connection, the joint may be formed with an adhesive connection connecting the first and second parts and configured to fail when the load reaches or exceeds the pre-defined load absorption activation threshold value. The joint may e.g. be configured as or with (an) adhesively bonded spot(s) instead of the welded spot(s).

In a development, the other one of the first and second parts comprises at least one aperture, in particular several apertures, and the destroyer device, in particular the destroyer element or destroyer elements capable of cutting and/or splitting the other one of the first and second parts, extends into the aperture or apertures. More preferably, each of the several destroyer elements extends into an associated one of the apertures. In this way, the destroyer elements and the material portions onto which they act, once the crash-load absorption function has been activated, are well protected, as the destructive absorption action is transferred into an inner region of the part(s) having the aperture(s). Possible damage to the destroyer elements and the portions on which they act, e.g. during maintenance work, can in this way be avoided in improved manner.

In a further development, the aperture(s) may each be formed as round hole, for example having a substantially circular cross-sectional shape. Such a shape can be manufactured in a relatively simple manner.

In a development, each of the first and second parts has a plate-type shape or a plate-type section. In particular, the plate-type shape and/or plate-type section may be substantially flat. In accordance with this development, the first and second parts are arranged such that main surfaces of the plate-type shape or section of each of the first and second parts at least partially overlap, and the joint is formed within the overlapping main surfaces of the plate-type shape or section or within the overlapping portions of these main surfaces. This may help to facilitate the forming of the joint and contributes to effective guiding of the parts along each other. Further, such plate-type shapes and/or sections are comparatively simple in manufacture and connection, and at the same time can be used to form a resistant attachment fitting, capable of bearing high load during the normal use for which it is designed. Moreover, parts including such plate-type shapes or sections can be used in expedient manner to support a component in a cantilevered manner, for instance, e.g. to laterally mount the component such as a hydrogen tank in order to support the weight thereof.

In a development, the apertures are formed within the plate-type shape or section of the other one of the first and second parts. In this way, the destroyer device can act on this plate-type shape or section, which may contribute to smooth destruction and energy absorption.

According to a further development, the plate-type section of at least one of the first and second parts is connected to a guiding flange which extends substantially along a longitudinal direction of the plate-type section. In this way, a relative movement of the first and second parts after activation of the crash-load absorbing function can be reliably guided in an expedient manner. Moreover, such a guiding flange can be used to provide stiffness and resistance to bending, e.g. during normal use of the attachment fitting.

In a development, the first part is formed as a profile-like element or as a profile and comprises a web as well as a bottom flange and a top flange. In particular, a top flange or a portion thereof may be used in advantageous manner in order to provide the guiding flange. Moreover, the top flange may be used to stiffen the first part. The bottom flange can facilitate a connection of the first part to another element, and may help to additionally guide the second part in some implementations. Also, such profiles can be manufactured well, e.g. from fibre-reinforced plastic composite comprising a thermoplastic matrix.

In a development, one of the first and second parts, in particular the first part, is adapted to be attached, in particular via an interposed base plate, to a structure, in particular an aircraft or spacecraft structure, and furthermore, the other one of the first and second parts, in particular the second part, is adapted to be attached to an object, device or component to be mounted and to be protected from excessive crash loads, such as e.g. a hydrogen tank.

According to a development, the bottom flange is welded, in particular using induction welding, to a base plate, and the base plate is adapted to be welded, in particular using resistance welding, to a structural member of an aircraft or spacecraft. The base plate may in particular be designed as part of the crash-load absorbing attachment fitting. In this development, induction welding can be used to efficiently produce a reliable welded connection between the bottom flange and the base plate, when manufacturing the attachment fitting, in a time-saving and well controllable manner. Resistance welding can then be used to connect the attachment fitting to the structural member in an expedient way. However, it is conceivable to use other types of welding for forming the welded connections of the bottom flange to the base plate and of the base plate to the structural member. For example, resistance welding or ultrasonic welding, e.g. continuous ultrasonic welding, may be used to connect the bottom flange to the base plate, and/or induction welding or ultrasonic welding, e.g. continuous ultrasonic welding, may be used to the connect the base plate to the structural member.

In another development, the first part may be configured as a collar and the second part may be configured as a rod-shaped element, wherein the first part comprises a passage configured to receive the second part. Preferably, in this development, the second part has a substantially circular outer cross-sectional shape and the passage of the first part has a substantially circular inner cross-sectional shape. Such a combination of a rod-shaped element and a collar may for instance be useful for applications where a load can be supported directly in the direction of action of the load, e.g. as a support for the weight of a component from below. Also, a collar and a correspondingly shaped rod-shaped element can be guided well along each other in a simple way.

In accordance with an improvement, the crash-load absorbing attachment fitting may be connected to a hinge or a gimbal. A hinged or gimballed attachment fitting may help to ensure that the crash-load absorbing function of the attachment fitting is effective within a wide range of impact angles.

In particular, in the thermoplastic matrix, reinforcing fibres are embedded, wherein the reinforcing fibres may for example be carbon fibres. However, it is conceivable to use other kinds of reinforcing fibres. Preferably, the reinforcing fibres are formed as long fibres or as endless or continuous fibres. Such reinforcing fibres make it possible to obtain an attachment fitting capable of sustaining high loads during normal use. Moreover, distintegration of a thermoplastic with such embedded reinforcing fibres consumes a high amount of energy, and in this manner, much kinetic energy can be effectively absorbed in a crash scenario.

In a further development, the crash-load absorbing attachment fitting is a tank integration bracket or a tank mounting bracket. In particular, the crash-load absorbing attachment fitting may be configured for attaching a tank, in particular a hydrogen tank, to a structure of an aircraft or spacecraft. Accordingly, a tank, for example a pressurized tank, e.g. containing liquefied hydrogen, can be efficiently protected against damage such as fracturing or puncturing. The crash-load absorbing attachment fitting of the present invention makes it possible to reduce the loads acting on such a tank in a crash scenario in such a manner that tank integrity can be ensured even beyond typical crash loads. Events that are to be prevented, such as e.g. a BLEVE (Boiling Liquid Expanding Vapor Explosion) of a punctured or fractured tank, can thus be avoided.

### BRIEF SUMMARY OF THE DRAWINGS

The present invention is explained in more detail below with reference to the embodiments shown in the schematic figures, wherein:
- Fig. 1: shows a crash-load absorbing attachment fitting according to a first embodiment, in a side view;
- Fig. 2: shows a crash-load absorbing attachment fitting according to a second embodiment, in a side view;
- Fig. 3: shows a crash-load absorbing attachment fitting according to a third embodiment, in a perspective view;
- Fig. 4: shows the crash-load absorbing attachment fitting according to the third embodiment in another perspective view;
- Fig. 5: shows the crash-load absorbing attachment fitting according to the third embodiment in still another perspective view;
- Fig. 6: shows the crash-load absorbing attachment fitting according to the third embodiment in still another perspective view;
- Fig. 7: shows a crash-load absorbing attachment fitting according to a fourth embodiment, in a perspective view;
- Fig. 8: shows an exemplary aircraft in which the crash-load absorbing attachment fitting may be used in accordance with embodiments of the invention; and
- Fig. 9: shows a crash-load absorbing attachment fitting according to a fifth embodiment, in a side view.

In the figures of the drawings, elements, features and components which are identical, functionally identical and of identical action are denoted in each case by the same reference designations unless stated otherwise.

### DESCRIPTION OF EXEMPLARY EMBODIMENTS

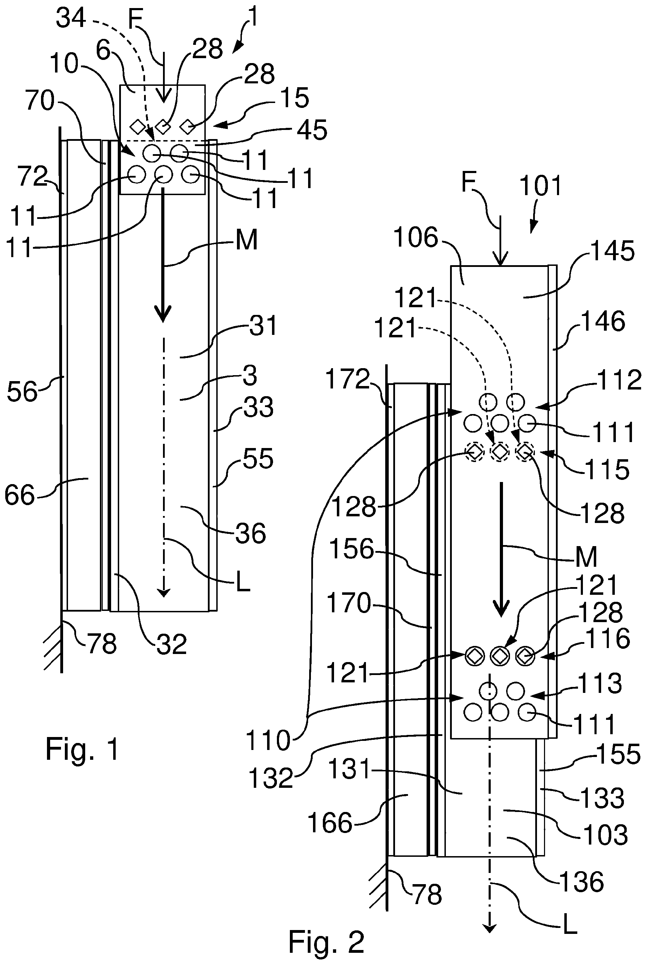

Fig. 1 shows a crash-load absorbing attachment fitting 1 according to a first embodiment. The attachment fitting 1 comprises a first part 3 and a second part 6, as well as a base plate 66.

The first part 3, the second part 6 and the base plate 66 are each formed from a fibre-reinforced composite material comprising a thermoplastic matrix. For example, carbon fibres may be embedded as reinforcing fibres in the thermoplastic matrix. Preferably, the reinforcing fibres are long fibres or endless or continuous fibres.

The first part 3 is formed as an elongated, profile-type element and comprises a shear web 31, which forms a plate-type section 36 of the first part 3. The shear web 31 may have a constant thickness and cross-section and may then be shaped flat, or the shear web 31 may be provided with a thickness variation, in particular a thickness increase, not shown in Fig. 1, along a longitudinal direction L of the first part 3, in particular with the thickness increasing towards the bottom in Fig. 1. The thickness of the shear web 31 may be configured to vary in different ways along the longitudinal direction L, wherein the thickness variation, e.g. increase, may not necessarily be linear. Furthermore, the first part 3 comprises a shear web foot or bottom flange 32 and a top flange 33, which may be integrally formed with the shear web 31 or may be fixedly connected thereto, e.g. by welding.

The second part 6 is a plate-shaped, flat piece, in particular shaped as a cuboid, having a flat, plate-type shape 45, and is configured as an interface plate for connection to a component to be attached by the crash-load absorbing attachment fitting 1. The attachment fitting 1 may for example be used for attaching a hydrogen tank to a structure of an aircraft or spacecraft, in particular in a suspended manner, and in this case, the second part 6 is formed as a tank interface plate.

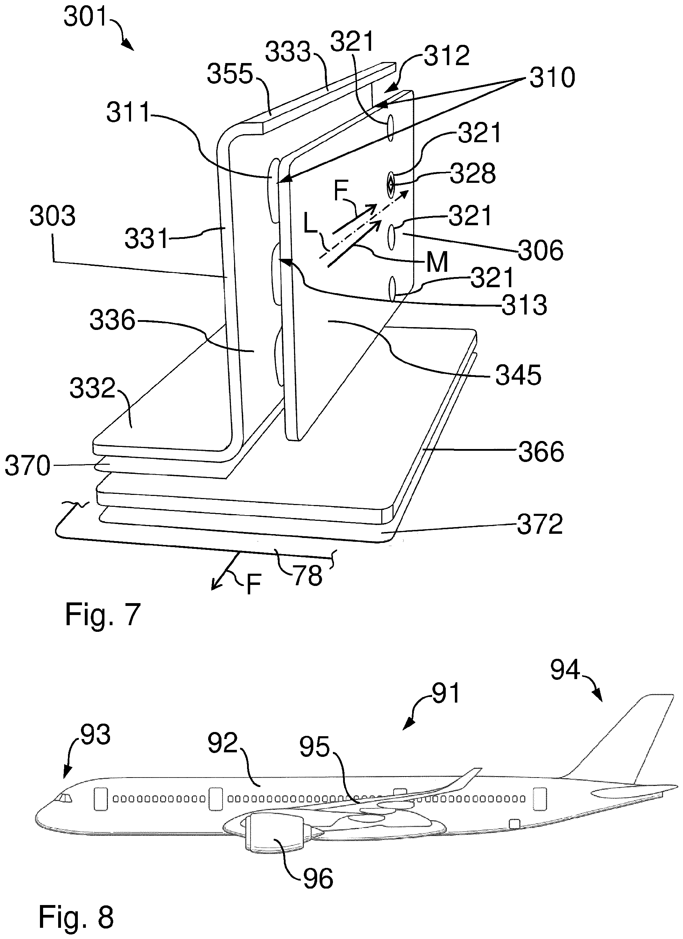

The base plate 66 is substantially flat and is adapted to be fixedly connected, on one of the main faces of the base plate 66, to a structural member 78 of the aircraft or spacecraft. An aircraft 91 which may comprise the structural member 78, e.g. as part of an airframe or as a member connected to the airframe, and in which the crash-load absorbing attachment fitting 1 of Fig. 1 may be used is displayed in exemplary manner in Fig. 8.

In the embodiment of Fig. 1, the base plate 66 is welded to the structural member 78, for example using resistance welding, in a welded connection 72. In this manner, for instance, a sub-assembly including the structural member 78 and the attachment fitting 1 may be formed.

The bottom flange 32 is substantially flat and is fixedly connected to the other one of the main faces of the base plate 66. In the embodiment of Fig. 1, the bottom flange 32 is welded to the base plate 66, in particular using induction welding, when producing the attachment fitting 1, forming a welded connection 70.

The crash-load absorbing attachment fitting 1 is shown in Fig. 1 in a state in which the attachment fitting 1 is capable of supporting a load F in a normal use situation, for which the attachment fitting 1 is designed. The load F may in particular result from the weight of a component supported by the attachment fitting 1, e.g. the hydrogen tank, and from inertial forces acting on that component.

In the state of Fig. 1, a main surface of the flat, plate-type shape 45 of the second part 6 and a main surface of the plate-type section 36, formed as the web 31, of the first part 3 partially overlap. The first and second parts 3, 6 are fixedly joined to each other at a joint 10 formed within the overlapping portions of the main surfaces of the flat, plate-type shape 45 and the plate-shaped section 36.

The joint 10 is configured to be capable of transferring, during normal use of the crash-load absorbing attachment fitting 1, the load F introduced into the second part 6 via the joint 10 to the first part 3, from the first part 3 into the base plate 66 via the welded connection 70, and from the base plate 66 into the structural member 78 via the welded connection 72. The attachment fitting 1 is a self-contained attachment device in which the first and second parts 3, 6, and the base plate 66, are load-bearing parts.

The joint 10 of the first embodiment is a welded joint 10 and comprises several welded spots 11, which may in a preferred variant be formed by ultrasonic spot welding. The welded joint 10 is configured, taking account of the characteristics of the welding procedure, for instance ultrasonic welding, such that by the joint 10, the load F can be transferred between the first and second parts 3 and 6 as long as the load F is below a pre-determined load-absorption activation threshold value, and further such that the joint 10 fails and breaks when the load F reaches or exceeds the pre-determined load-absorption activation threshold value. In this way, the welding pattern comprising the welded spots 11, obtained e.g. using ultrasonic spot welding, fails at a pre-specified load to start a destructive crash-load absorption, as described in the following. The welded connections 70 and 72 are configured to reliably remain intact at the load-absorption activation threshold value, with an appropriate margin, in order to ensure that the activation of the load-absorption function is triggered by failure of the joint 10.

For forming the spots 11, in variants, the use of other welding procedures which make it possible to produce a joint zone with well controllable properties, such as resistance welding or induction welding, may alternatively be envisaged.

In order to effectively absorb crash loads in a crash scenario and in order to consume, for this purpose, high amounts of kinetic energy in a comparatively smooth and gradual manner while limiting deceleration and resulting forces acting in particular on the component attached by the fitting 1, for instance the hydrogen tank, the crash-load absorbing attachment fitting 1 is provided with a destroyer device 15. The destroyer device 15 comprises several destroyer elements 28 which are rigidly connected with the second part 6. For example, each destroyer element 28 may be partially seated in a bush, not shown in Fig. 1, which can be attached to or embedded into the second part 6. In Fig. 1, each of the destroyer elements 28 or at least a portion of the destroyer element(s) 28 protruding from the bush is shaped as a prismatoid, in particular a prism. More specifically, in Fig. 1, the prism-shape has a square base, in particular is a cuboid shape, and protrudes from the second part 6 in a direction transverse to the main surface overlapping the web 31 of the first part 3, and in the direction towards the first part 3. In other words, in Fig. 1, the reference signs 28 denote the locations of the destroyer elements 28, but these elements 28 protrude from the back of the second part 6, as it is oriented in Fig. 1.

In variants, the elements 28 may be formed with a shape other than that of a prism, e.g. a shape of another prismatoid such as a frustrum of a pyramid, for instance, e.g. with a square base. Instead of being square, the base of the prism or frustum may be rhombic, may be generally quadrangular, or may be another polygon. The destroyer elements 28 can advantageously be made from a metal material, in particular a steel, e.g. a hardened steel.

In the situation in Fig. 1, the destroyer elements 28 are located adjacent to an edge 34 of the shear web 31 of the first part 3, but in Fig. 1 still without acting on the edge 34. When the crash-load absorbing function is activated as the joint 10 fails, the destroyer elements 28 work into the web 31 of the first part 3 starting from the edge 34, smoothly disintegrating the web 31 by cutting and/or splitting it, using the forward edges of the destroyer elements 28, which may also be designated as CFRP cutting heads.

After breaking of the joint 10 and during the destructive action of the destroyer elements 28, the second part 6 moves along the first part 3 along a direction of movement M, which substantially corresponds to a longitudinal direction L of the first part 3 and second part 6. During the relative movement, the parts 3 and 6 are guided along each other by the top flange 33, wherein the top flange 33 or part thereof forms a guiding flange 55, and by the bottom flange 32, wherein the bottom flange 32 or part thereof forms a further guiding flange 56. Side edges of the second part 6 can move along the guiding flanges 55, 56, which prevent the second part 6 from escaping in a direction transverse to the longitudinal direction L. Further, the parts 3 and 6 are slidably guided along each other by the interacting main surfaces of the plate-type section 36 and of the plate-type shape 45.

Using a variation in the thickness of the shear web 31 along the longitudinal direction L, and hence along the direction of movement M, as described above, the energy consumption during the destructive action of the destroyer elements 28 can be varied over time. In this way, for example, the load resulting during the crash scenario can be controlled.

The crash-load absorbing attachment fitting 1, described with reference to Fig. 1, is a welded fitting, which can be welded in a relatively simple manner from plates of simple shape.

A crash-load absorbing attachment fitting 101 in accordance with a second embodiment is schematically shown in Fig. 2. The attachment fitting 101 comprises a first part 103 and a second part 106. The first part 103 is configured to substantially correspond to the first part 3 of the first embodiment, and has a shear web 131 forming a plate-type section 136, a foot or bottom flange 132 and a top flange 133, wherein the flanges 132 and 133 are fixedly connected, in particular integrally connected, to the shear web 131. In the same manner as in Fig. 1, the bottom flange 132 is induction-welded to a base plate 166 to form a welded connection 170, and the base plate 166 is resistance-welded to the structural member 78 of the aircraft or spacecraft to form a welded connection 172. The top flange 133, or part thereof, forms a guiding flange 155 and further provides the first part 103 with additional stiffness, and the bottom flange 132 forms another guiding flange 156.

The second part 106 of the second embodiment is configured with a greater length than the second part 6 of the first embodiment, and includes a substantially flat, plate-type section 145. The dimensions of the first and second parts 403, 406 are closer to each other in the second embodiment. Along one of the longitudinal sides of the plate-type section 145, the second part 106 comprises a guiding flange 146.

The flanges 155, 156, 145 extend parallel to a common longitudinal direction L of the first and second parts 103, 106.

As in the first embodiment, a thickness of the plate-type section 136 and/or of the plate-type section 145 may be constant or may in variants vary along the longitudinal direction L.

The load-bearing parts 103 and 106 are joined to each other at a joint 110 comprising two joining regions 112 and 113 separated from each other by a distance along the longitudinal direction L, wherein each of the joining regions 112, 113 comprises several welded spots 111 formed in the same manner as explained for the spots 11, preferably using ultrasonic spot welding. The joint 110 is configured so as to be capable of transferring, in normal use, a load below a pre-determined load-absorption activation threshold value between the parts 103 and 106, and breaks when the load F reaches or exceeds the pre-determined load-absorption activation threshold value.

The attachment fitting 101 comprises a first destroyer device 115 and a second destroyer device 116. Each of the destroyer devices 115, 116 is configured in a manner analogous to the destroyer device 15, described above, and is formed with several destroyer elements 128, which are configured in the same manner as the destroyer elements 28 of the first embodiment.

The destroyer elements 128 of the first destroyer device 115 are rigidly connected to the second part 106, which may form a tank interface plate. After failure of the joint 110 at the pre-defined activation threshold value, the destroyer elements 128 of the first destroyer device 115 move with the second part 106 relative to the first part 103 along a direction of movement M, parallel to the longitudinal direction L.

The destroyer elements 128 of the second destroyer device 116 are rigidly connected to the first part 103, which can be considered a structure side member or structure interface member. More specifically, the destroyer elements 128 of the second destroyer device 116 are rigidly connected to the shear web 131. After failure of the joint 110 at the pre-defined activation threshold value, the destroyer elements 128 of the second destroyer device 116 remain stationary with the first part 103 and can hence be considered to move relative to the second part 106 opposite to the direction of movement M and parallel to the longitudinal direction L.

The plate-type section 145 of the second part 106 is provided with several apertures 121, the positions of which each correspond to the position of an assigned one of the destroyer elements 128 of the second destroyer device 116. A portion, e.g. shaped as a prismatoid, in particular a prism, of each of the destroyer elements 128 of the second destroyer device 116 extends into the associated aperture 121. The apertures 121 are, for example, circular holes extending through the thickness of the plate-type section 145.

The plate-type section 131 of the first part 103 is provided with several apertures 121, the positions of which each correspond to the position of an assigned one of the destroyer elements 128 of the first destroyer device 115. A portion, e.g. shaped as a prismatoid, in particular a prism, of each of the destroyer elements 128 of the first destroyer device 115 extends into the associated aperture 121. The apertures 121 are, for example, circular holes extending through the thickness of the plate-type section 136.

As in the first embodiment, the parts 103, 106 and base plate 166 are each formed with a fibre-reinforced composite material having a thermoplastic matrix and long or endless reinforcing fibres, for example carbon fibres, embedded therein.

When the joint 110 breaks as the load F reaches or exceeds the load-absorption activation threshold value, the destroyer elements 128, or CFRP cutting heads 128, of the first destroyer device 115 destructively act on the shear web 131, or plate-type section 136, of the first part 103, and the destroyer elements 128, or CFRP cutting heads 128, of the second destroyer device 116 destructively act on the plate-type section 145 of the second part 106. The disintegration of both plate-type sections 136 and 145 consumes a high amount of kinetic energy, which is useful for effective crash-load absorption.

During the movement of the second part 106 relative to the first part 103 along a direction M parallel to the longitudinal direction L, the parts 103 and 106 are guided along each other in a sliding manner. Opposing, partially overlapping main surfaces of the plate-type sections 145 and 136, between which the joint 110 had been formed, slide along each other. Laterally, in a direction transverse to the longitudinal direction L, the guiding flange 146 of the second part 106 and the guiding flange 155 of the first part 103 can interact and guide the movement M. A further guiding function can be provided by the flange 156.

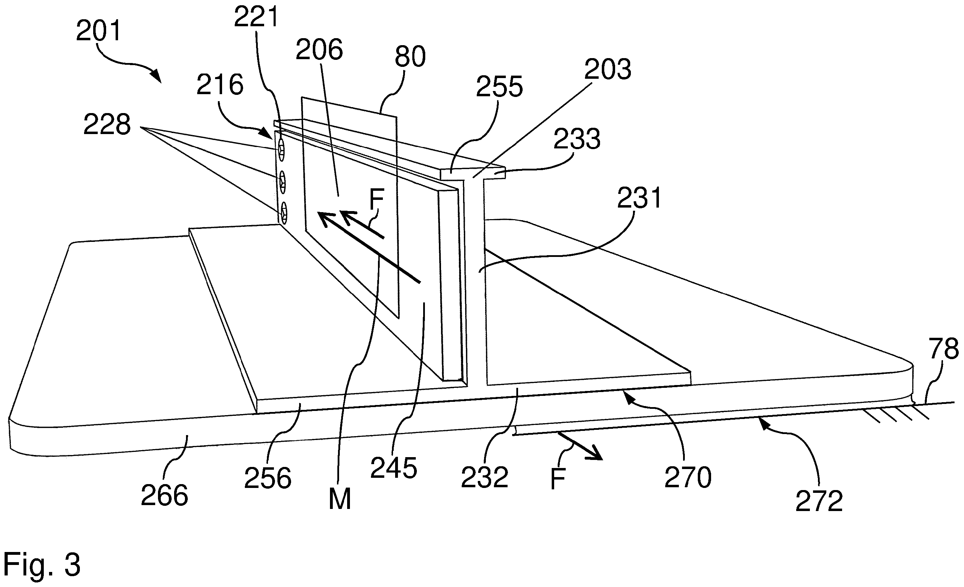

A crash-load absorbing attachment fitting 201 in accordance with a third embodiment, comprising first and second load-bearing parts 203, 206 and a base plate 266, is schematically shown in Figs. 3-6. The parts 203 and 206 as well as the base plate 266 are formed from a fibre-reinforced composite material comprising a thermoplastic matrix and long or endless or continuous reinforcing fibres, in particular carbon fibres, embedded therein. The attachment fitting 201 differs from the fitting 101 of the second embodiment in the number and arrangement of weld spots 211 forming first and second joining regions 212, 213 of a joint 210 connecting the first and second parts 203, 206. As in the case of the above-described spots 11 and 111, the spots 211 are formed preferably by ultrasonic spot welding, in a manner tailored to yield a desired failure load of the joint 210 as a whole.

Also, different from the second embodiment, the second part 206 is flat and plate-shaped as a whole, and thus has a flat, plate-type shape 245 with an elongated rectangular contour. Each of the joining regions 212 and 213 is arranged adjacent to one of two end regions of each of the first and second parts 203, 206, seen along a longitudinal direction L of both first and second parts 203, 206.

The first part 203 is formed as a substantially T-shaped profile, has a constant cross-sectional shape along the longitudinal direction L, and comprises a shear web 231 as well as a wide bottom flange 232 and a narrow top flange 233. The bottom flange 232 is welded, in particular using induction welding, to the base plate 266 in a welded connection 270.

In the state shown in Figs. 3-6, in which the attachment fitting 201 can transmit loads between the first and second parts 203, 206 during normal use, the second part 206 is arranged adjacent and parallel to and along one of the main surfaces of the shear web 231. In the third embodiment, a length of the first part 203 and a length of the second part 206 along the longitudinal direction L are approximately equal. Accordingly, the main surface of a flat, plate-type section 236 formed by the web 231 adjacent to which the second part 206 is arranged, and an opposing main surface of the plate-type shape 245 of the second part 206, substantially fully overlap. The joint 210 is formed within the overlapping main surfaces by the welded spots 211, arranged near opposing ends thereof seen in longitudinal direction L.

Figs. 3-6 show that when a load F acting approximately parallel to the longitudinal direction L reaches or exceeds a pre-determined load-absorption activation threshold value, the joint 210 breaks and the second part 206 can move relative to the first part 203 along a direction of movement M parallel to the longitudinal direction L. During this movement, the second part 206 is guided by the interacting main surfaces of the shear web 231 and the flat, plate-type shape 245. A further guiding function is provided by the top and bottom flanges 233 and 232, between which the second part 206 is arranged. Thus, portions of the top flange 233 and of the bottom flange 232 serve as guiding flanges 255 and 256, respectively, longitudinally extending along the flat, plate-type section 236 and integrally connected thereto.

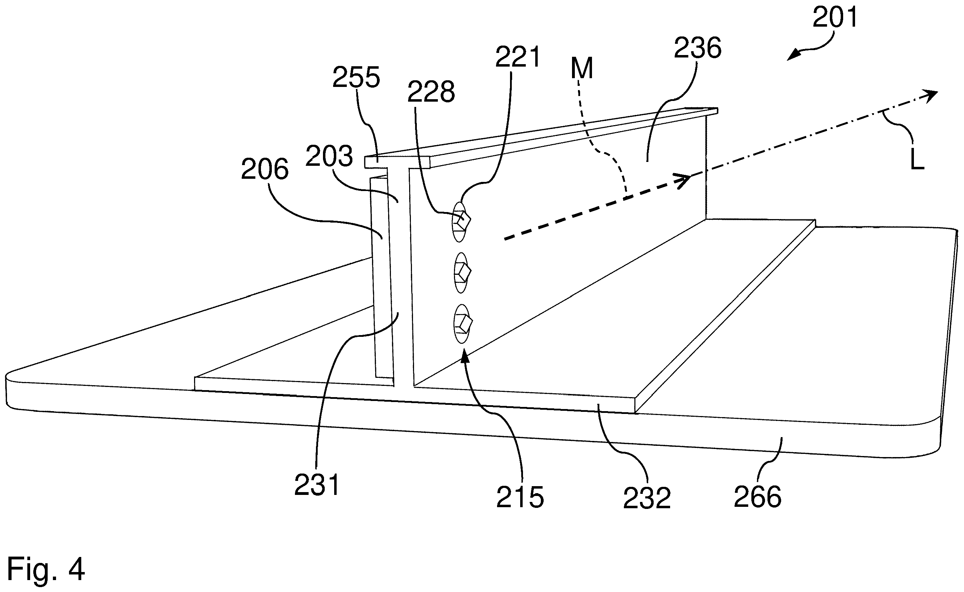

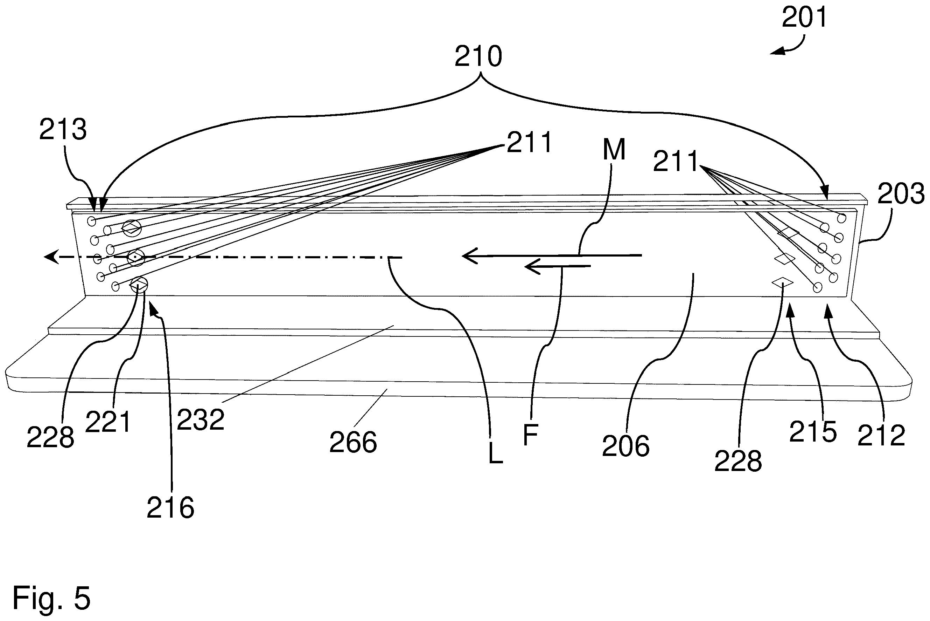

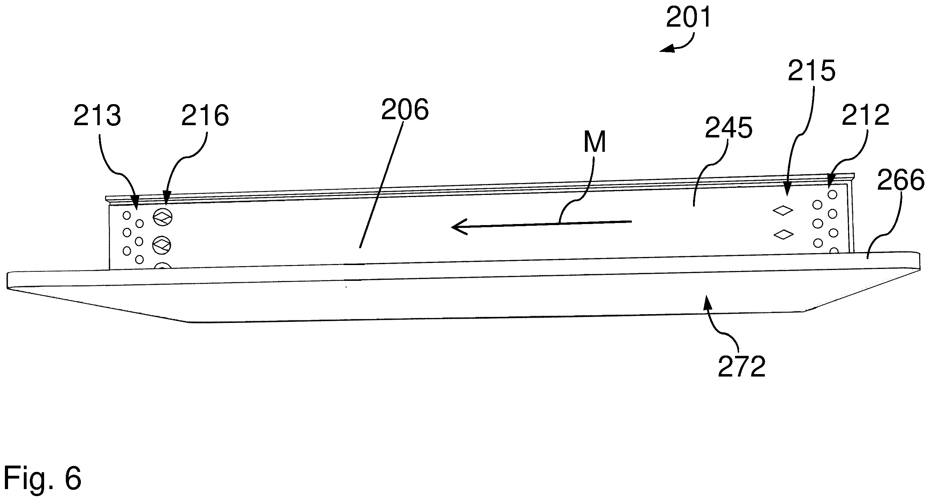

The crash-load absorbing attachment fitting 201 comprises two destroyer devices 215 and 216, each arranged close to one of the joining regions 212 and 213, see Figs. 5 and 6. The joining regions 212, 213 are not illustrated in Figs. 3 and 4, as the weld spots 211 forming these regions 212, 213 are located between and join the opposing main surfaces of the plate-type shape 245 and plate-type section 236. In a side view, as e.g. in Figs. 5, 6, both destroyer devices 215 and 216 are located between the joining regions 212 and 213, seen along the longitudinal direction L.

Each of the destroyer devices 215 and 216 is provided with several destroyer elements 228 extending into circular apertures 221 in the shear web 231 of the first part 203 and in the second part 206, respectively, in the manner described above for the destroyer elements 128 and apertures 121 of the second embodiment.

Once the joint 210 has failed due to the load F exceeding the load-absorption activation threshold value, the destroyer elements 228 of the first destroyer device 215 destructively act on the web 231 of the first part 203, and the destroyer elements 228 of the second destroyer device 216 destructively act on the second part 206. The destroyer elements 228 of the first destroyer device 215 are rigidly connected to the second part 206, and the destroyer elements 228 of the second destroyer device 216 are rigidly connected to the shear web 231 of the first part 203. The destroyer elements 228 as such are configured as described above for the elements 28 and 128.

The second part 206 serves as an interface to the component that is to be attached and protected against excessive crash loads, e.g. as a tank interface plate or tank mounting plate. A tank-side interface element 80 to which the second part 206 is to be connected is schematically indicated in Fig. 3, which also schematically shows a structural element 78 of an aircraft or spacecraft structure to which the base plate 266 is connected, in particular using welding such as resistance welding, in a welded connection 272.

In variants of the third embodiment, for example, one of the destroyer devices 216 or 215 may be omitted, and in such variants, only one of the shear web 231 and the second part 206 is then disintegrated by the destructive action of destroyer elements 228 if the load-absorption activation threshold value is reached or exceeded.

In variants of the third embodiment, a thickness variation of the shear web 231 and/or the second part 206 along the longitudinal direction L, e.g. in such a manner that the destroyer elements 228 of each of the destroyer devices 215 and 216 act on material of increasing thickness as the absorption of kinetic energy progresses, is conceivable. In particular, if both the shear web 231 and second part 206 are configured to be disintegrated by the destroyer elements 228 for providing high energy absorption in a space-saving manner, a local thickness change of the shear web 231 and/or the second part 206 may in particular be used to implement a pre-determined destruction stop position. Thereby, the destructive action can advantageously be terminated in a defined manner.

Moreover, in further variants of the third embodiment, the first part 203, which serves as a transfer or load absorption member, instead of being T-shaped in cross-section may be formed with a C-shaped cross-section or a Z-shaped cross-section or a H-shaped cross-section, or with another cross-sectional shape, arranged and dimensioned to make sure that the movement along direction M in the crash scenario occurs in a defined, controlled manner.

In still further variants of the third embodiment, not illustrated in the Figures, two second parts 206 may be provided to form a symmetrical arrangement of the parts 206 on both main surfaces of the shear web 231. In such a variant, destroyer elements 228 may e.g. be fixedly connected to the web 231 so as to protrude from both main surfaces of the web 231. If the pre-determined load-absorption activation threshold value is reached or exceeded, the destroyer elements 228 can act on each of the second parts 206. Furthermore, destruction of the shear web 231 may also be envisaged in the case of such a symmetrical arrangement, and in this case, preferably provisions are made to ensure that material can be expelled during destructive energy absorption.

Fig. 7 displays a crash-load absorbing attachment fitting 301 according to a fourth embodiment. In order to reduce maintenance work, the attachment fitting 301 comprises a single energy absorption member.

The crash-load absorbing attachment fitting 301 comprises first and second load-bearing parts 303 and 306 as well as a load-bearing base plate 366. The parts 303, 306 and the base plate 366 are each formed from a fibre-reinforced composite material comprising a thermoplastic matrix with long or endless or continuous reinforcing fibres, in particular carbon fibres, embedded therein. More specifically, the first part 303, which may be designated as a load introduction flange, may be formed from a fibre-reinforced composite material with thermoplastic matrix and having 18 plies, the base plate 366 may be formed from a fibre-reinforced composite material with thermoplastic matrix and having 18 plies, and the second part 306, which may be designated as a tank mounting plate, may be formed from a fibre-reinforced composite material with thermoplastic matrix and having 12 plies. These numbers of plies given are useful but are exemplary only, and other numbers of plies are conceivable in variants of the fourth embodiment.

The first part 303 is formed as a profile having a constant, Z-shaped cross-section and comprises a shear web 331 arranged between and connected to a bottom flange 332 and a top flange 333, wherein the bottom flange 332 is wider than the top flange 333. The bottom and top flanges 332, 333 extend along a longitudinal direction L of the first and second parts 303, 306 from opposite sides of the web 331. The shear web 331 of the first part 303 is formed as a flat, plate-type section 336. The second part 306 is formed as a flat plate with a flat, plate-type shape 345.

In the fourth embodiment of Fig. 7, the bottom flange 332 is welded, in particular using induction welding, to the base plate 366 at a welded connection 370. Moreover, the base plate 366 is configured to be welded, in particular using resistance welding, to a structural member 78 of an aircraft or spacecraft at a welded connection 372.

A main surface of the plate-type section 336 of the first part 303 and an opposing main surface of the plate-type shape 345 of the second part 306 substantially entirely overlap, in other words, these main surfaces have approximately the same shape and size and are placed one against the other.

Within the overlapping main surfaces, the parts 303 and 306 are joined to each other at a joint 310 formed with two joining regions 312 and 313, in each of which several welded spots 311 are provided. The welded spots 311 may preferably be formed using ultrasonic spot welding.

The joint 310 is adapted to transfer, during normal use, a load F below a pre-determined load-absorption activation threshold value from the first part 303 into the second part 306. From the second part 306, the load F is transferred into the base plate 366 and from the base plate 366 into the structural component 78. The welded connections 370, 372 are designed and created to reliably remain intact at the load-absorption activation threshold value, so that a pre-determined breaking point is formed by the joint 310.

The attachment fitting 301 also comprises a destroyer device 315 that is rigidly connected to the first part 303 and comprises a plurality of destroyer elements 328, only one of which is schematically indicated in Fig. 7. The destroyer elements 328 are formed in the same manner as explained above for the first to third embodiments, are fixedly and rigidly connected to the shear web 331 of the first part 303, and each partially protrude into an assigned one of several apertures 321, each shaped as a round, circular hole, in the second part 306 near one end thereof and near the joining region 312.

Once the load F reaches or exceeds the pre-determined load-absorption activation threshold value, the joint 310 fails, the parts 303 and 306 slide along each other with the first part 303 moving in a direction of movement M relative to the second part 306, and the destroyer elements 328 destructively act on the second part 306. In the embodiment shown in Fig. 7, destroyer elements acting on the web 331 are omitted and the tank mounting plate 306 serves as a single energy absorption member, which facilitates maintenance.

During the sliding movement along direction M, the parts 303 and 306 are guided along each other in a first direction transverse to the direction of movement M by the interacting, opposing main surfaces of the flat, plate-type shape 345 and of the flat, plate-type section 336 formed by the web 331. In a second direction transverse to the direction of movement M and also transverse to the first direction transverse thereto, the parts 303, 306 are guided by an upper face of the base plate 366 and by the top flange 333, which serves as a guiding flange 355.

The crash-load absorbing attachment fitting 301 of the fourth embodiment can be manufactured in a further facilitated manner, in particular due to the first part 303 which can be made by bending a flat material, and further in particular by the Z-shape, in which the flanges each laterally protrude from one side of the shear web 331 only.

Regarding the arrangement of the destroyer elements 28, 128, 228, 328, these are located in such a way that for the expected direction of action of the load F and the expected orientation of the direction of movement M, the destructive path of the elements 28, 128, 228, 328 through the material on which it acts is as long as possible, to optimize the consumption of kinetic energy.

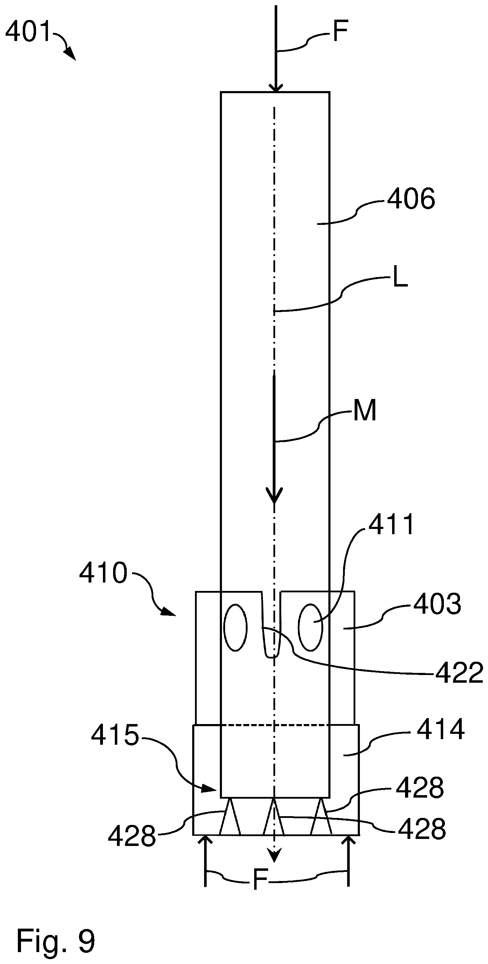

A crash-load absorbing attachment fitting 401 according to a fifth embodiment is schematically depicted in Fig. 9. The attachment fitting 401 comprises a first part 403 that is configured as a collar, and a second part 406 that is configured as an elongated, rod-shaped element. The first part 403 comprises an internal passage having a circular inner cross-sectional shape, the second part 406 has a circular outer cross-sectional shape, and the internal passage of the first part 403 is configured to receive the second part 406.

The first and second parts 403, 406 are joined to each other at a joint 410 formed with a plurality of welded spots 411, e.g. four spots 411, arranged along a circumference of the first and second parts 403, 406, wherein the spots 411 are preferably formed using ultrasonic spot welding. More specifically, the spots 411 are in Fig. 9 arranged in an end region of the collar-type first part 403 provided with axially extending slot-shaped cutouts 422 between two of the spots 411 in each case.

The first part 403 is rigidly supported on a destroyer part 414, which has a cap-like shape and receives a lower end of the second part 406. At destroyer device 415 with destroyer elements 428 is provided at an end of the destroyer part 414, which may e.g. be made from a metal. The destroyer part 414 may in some implementations be fixedly connected to the first part 403. The destroyer part 414 and the first part 403 may in other variants be formed as an integral part, with the destroyer elements 428 connected thereto.

During normal use, a load F is transferred between the load-bearing first and second parts 403 and 406 by the joint 410, as long as the load F is lower than pre-defined load-absorption activation threshold value. The second part 406 may be used as an interface to a component, e.g. a hydrogen tank, to be attached using the attachment fitting 401, and the destroyer part 414, or an integral piece including the destroyer part 414 and the first part 403, can serve as an interface to an aircraft or spacecraft structure, e.g. the structural component 78. In the case of normal use, the load F follows a path from the second part 406 via the joint 410 into the first part 403 and then, via the rigid support on or connection with the destroyer part 414, into the structure.

When the load F reaches or exceeds the pre-determined load-absorption activation threshold value, the joint 410 breaks, the second part 406 is guided by the first part 403 for sliding motion of the second part 406 relative to the first part 403 along a direction M, parallel to a longitudinal direction L of the parts 403 and 406, and the destroyer elements 428 destructively act on the rod-shaped second part 406 starting from the lower end in Fig. 9, thus consuming large amounts of kinetic energy, by cutting and/or splitting the second part 406.

Preferably, the first and second parts 403, 406 are made from a fibre-reinforced composite material comprising a thermoplastic matrix with embedded, long or endless or continuous reinforcing fibres, for example carbon fibres.

In variants of each of the embodiments described herein above, the crash-load absorbing attachment fitting 1, 101, 201, 301, 401 can be arranged in a hinged or gimballed manner, i.e. the attachment fitting 1, 101, 201, 301, 401 can be connected to a hinge or to a gimbal device either via the first part 3, 103, 203, 303, 403 or the base plate 66, 166, 266, 366 or the part 414, or via the second part 6, 106, 206, 306, 406. Such a hinged or gimballed variant may help to enable effective absorption and reduction of crash loads acting within a wide angular range, which may be useful to protect a component such as the tank against damage within a wide range of impact angles in a crash scenario. For instance, in other variants, a respective hinge or gimbal device may be connected to each of the first part 3, 103, 203, 303, 403 or the base plate 66, 166, 266, 366 or the part 404, on the one hand, and to the second part 6, 106, 206, 306, 406, on the other hand, in such a way that the attachment fitting 1, 101, 201, 301, 401 is arranged between two gimbal devices, two hinges or a gimbal device and a hinge. This helps to make sure that the direction of movement and the direction of force, during a crash scenario, substantially correspond.

The use of welding techniques for manufacturing the fittings 1, 101, 201, 301, 401 of the above-described embodiments is particularly advantageous with respect to an expedient manufacturing process, for instance. Yet, in some alternative variants, for example, the welded spots 11, 111, 211, 311 or 411 may be replaced by connecting elements such as shear bolts, e.g. of rivet-type, configured to fail at a defined load. Moreover, in further alternative variants, the welded spots 11, 111, 211, 311, 411 may be replaced by adhesively bonded spots.

The crash-load absorbing attachment fittings 1, 101, 201, 301, 401 each may be used to attach, in particular, a tank for storing liquefied, cryogenic hydrogen in an aircraft or spacecraft to a structural member thereof, for example to a structural member of the aircraft 91 in Fig. 8, which is configured as a passenger aeroplane.

Such a hydrogen tank can be attached in a suspended manner using a fitting 1, 101, 201 or 301, which are each designed as a fitting in which a load acts in the manner of a tensional load during crash-load absorption, or the hydrogen tank can be supported in a standing manner using the fitting 401, designed to support a compressive load and in which a load acts in a compressive manner during crash-load absorption.

For example, a hydrogen tank may be attached to the structural element of the aircraft or spacecraft at tank attachment points using a crash-load absorbing attachment fitting 1, 101, 201, 301 according to one of the embodiments described herein above at each attachment point. In typical crash scenarios, a large crash load F may act in a generally downward direction. The kinetic energy of the tank can be consumed to a significant extent by the attachment fittings 1, 101, 201, 301 as discussed above, to protect the tank against damage.

In another tank arrangement, the tank could be attached in a standing manner and could be supported vertically from below, using the fitting 401, or more than one fitting 401.

Moreover, a suspended attachment of the hydrogen tank by one or more fitting(s) 1, 101, 201, 301 may be combined with a standing support of that hydrogen tank by one or more fitting(s) 401 within one tank arrangement. For example, a tank arrangement may comprise the hydrogen tank attached via two fittings 1, 101, 201, or 301 and one fitting 401.

Even though the invention has been completely described above with reference to embodiments of the invention, the invention is not limited to these embodiments but may be modified in many ways.

### LIST OF REFERENCE SIGNS

- 1, 101, 201, 301, 401: crash-load absorbing attachment fitting
- 3, 103, 203, 303,403: first part
- 6, 106, 206, 306, 406: second part
- 10, 110, 210, 310, 410: joint
- 11, 111, 211, 311, 411: welded spot
- 112, 212, 312: joining region
- 113, 213, 313: joining region
- 414: destroyer part
- 15, 115, 215, 315, 415: destroyer device
- 116, 216: destroyer device
- 121,221,321: aperture
- 422: cutout
- 28, 128, 228, 328, 428: destroyer element
- 31, 131, 231, 331: shear web
- 32, 132, 232, 332: bottom flange
- 33, 133, 233, 333: top flange
- 34: edge
- 36, 136, 236, 336: plate-type section
- 45, 245, 345: plate-type shape
- 145: plate-type section
- 146: guiding flange
- 55, 155, 255, 355: guiding flange
- 56, 156, 256: guiding flange
- 66, 166, 266, 366: base plate
- 70, 170, 270, 370: welded connection
- 72, 172, 272, 372: welded connection
- 78: structural member (aircraft or spacecraft)
- 80: tank-side interface element
- 91: aircraft
- 92: fuselage
- 93: nose
- 94: empennage
- 95: wing
- 96: engine
- F: load
- L: longitudinal direction
- M: direction of movement

## Claims

1. Crash-load absorbing attachment fitting (1; 101; 201; 301; 401), comprising a first part (3; 103; 203; 303; 403) and a second part (6; 106; 206; 306; 406) that are joined to each other at a joint (10; 110; 210; 310; 410), the first and second parts (3, 6; 103, 106; 203, 206; 303, 306; 403, 406) being load-bearing parts, wherein the joint (10; 110; 210; 310; 410) is configured such that the joint (10; 110; 210; 310; 410) is capable of transferring, during normal use of the crash-load absorbing attachment fitting (1; 101; 201; 301; 401), a load (F) which is below a pre-determined load-absorption activation threshold value between the first and second parts (3, 6; 103, 106; 203, 206; 303, 306; 403, 406), and such that the joint (10; 110; 210; 310; 410) breaks when the load (F) reaches or exceeds the pre-determined load-absorption activation threshold value; and wherein the crash-load absorbing attachment fitting (1; 101; 201; 301; 401) further comprises a destroyer device (15; 115; 215; 315; 415), wherein the destroyer device (15; 115; 215; 315; 415) is rigidly connected to and/or rigidly supported by one of the first and second parts (3, 6; 103, 106; 203, 206; 303, 306; 403, 406) and wherein the destroyer device (15; 115; 215; 315; 415) is arranged so as to be capable of destructively acting on the other one of the first and second parts (3, 6; 103, 106; 203, 206; 303, 306; 403, 406) after breaking of the joint (10; 110; 210; 310; 410).

2. Crash-load absorbing attachment fitting according to claim 1, **characterized in that** the first part (3; 103; 203; 303; 403) and/or second part (6; 106; 206; 306; 406) is or are made with a fibre-reinforced composite material, in particular a fibre-reinforced composite material comprising a thermoplastic matrix.

3. Crash-load absorbing attachment fitting according to any one of the preceding claims, **characterized in that** the destroyer device (15; 115; 215; 315; 415) is formed with at least one destroyer element (28; 128; 228; 328; 428), in particular several destroyer elements (28; 128; 228; 328; 428), capable of cutting and/or splitting the other one of the first and second parts (3, 6; 103, 106; 203, 206; 303, 306; 403, 406).

4. Crash-load absorbing attachment fitting according to any one of the preceding claims, **characterized in that** the first and second parts (3, 6; 103, 106; 203, 206; 303, 306; 403, 406) are arranged so as to be slidably guided along each other for movement of the first and second parts (3, 6; 103, 106; 203, 206; 303, 306; 403, 406) relative to each other after breaking of the joint (10; 110; 210; 310; 410).

5. Crash-load absorbing attachment fitting according to any one of the preceding claims, **characterized in that** the joint (10; 110; 210; 310; 410) is formed as a welded connection.

6. Crash-load absorbing attachment fitting according to any one of the preceding claims, **characterized in that** the joint (10; 110; 210; 310; 410) comprises at least one welded spot (11; 111; 211; 311; 411), preferably several welded spots (11; 111; 211; 311; 411), and in particular **in that** the welded spots (11; 111; 211; 311; 411) are formed by ultrasonic spot welding.

7. Crash-load absorbing attachment fitting according to any one of the preceding claims, **characterized in that** the other one of the first and second parts (103, 106; 203, 206; 306) comprises at least one aperture (121; 221; 321), in particular several apertures (121; 221; 321), and **in that** the destroyer device (115; 215; 315), in particular the destroyer element or destroyer elements (128; 228; 328) capable of cutting and/or splitting the other one of the first and second parts (103, 106; 203, 206; 306), extends into the aperture (121; 221; 321) or apertures (121; 221; 321).

8. Crash-load absorbing attachment fitting according to any one of the preceding claims, **characterized in that** each of the first and second parts (3, 6; 103, 106; 203, 206; 303, 306) has a plate-type shape (45; 245; 345) or a plate-type section (36; 136, 145; 236; 336), **in that** the first and second parts (3, 6; 103, 106; 203, 206; 303, 306) are arranged such that main surfaces of the plate-type shape or section (36, 45; 136, 145; 236, 245; 336, 345) of each of the first and second parts (3, 6; 103, 106; 203, 206; 303, 306) at least partially overlap, and **in that** the joint (10; 110; 210; 310) is formed within the overlapping main surfaces of the plate-type shape or section (36, 45; 136, 145; 236, 245; 336, 345) or within overlapping portions of the main surfaces.

9. Crash-load absorbing attachment fitting according to claim 8 in connection with claim 7, **characterized in that** the apertures (121; 221; 321) are formed within the plate-type shape or section (136, 145; 236, 245; 345) of the other one of the first and second parts (3, 6; 103, 106; 203, 206; 306).

10. Crash-load absorbing attachment fitting according to claim 8 or 9, **characterized in that** the plate-type section (36; 136, 145; 236; 336) of at least one of the first and second parts (3, 6; 103, 106; 203, 206; 303, 306) is connected to a guiding flange (55; 155, 156, 146; 255, 256; 355) which extends substantially along a longitudinal direction (L) of the plate-type section (36; 136, 145; 236; 336).

11. Crash-load absorbing attachment fitting according to any one of the preceding claims, **characterized in that** the first part (3; 103; 203; 303) is formed as a profile-like element or as a profile and comprises a web (31; 131; 231; 331) as well as a bottom flange (32; 132; 232; 332) and a top flange (33; 133; 233; 333).

12. Crash-load absorbing attachment fitting according to claim 11, **characterized in that** the bottom flange (32; 132; 232; 332) is welded, in particular using induction welding, to a base plate (66; 166; 266; 366) and further **in that** the base plate (66; 166; 266; 366) is adapted to be welded, in particular using resistance welding, to a structural member (78) of an aircraft or spacecraft (91).

13. Crash-load absorbing attachment fitting according to any one of claims 1 to 7, **characterized in that** the first part (403) is configured as a collar and the second part (406) is configured as a rod-shaped element, wherein the first part (403) comprises a passage configured to receive the second part (406), and preferably **in that** the second part (406) has a substantially circular outer cross-sectional shape and the passage of the first part (403) has a substantially circular inner cross-sectional shape.

14. Crash-load absorbing attachment fitting according to any one of the preceding claims, **characterized in that** the crash-load absorbing attachment fitting (1; 101; 201; 301; 401) is connected to a hinge or a gimbal.

15. Aircraft or spacecraft (91) comprising a tank for storing hydrogen, in particular liquefied hydrogen, and at least one crash-load absorbing attachment fitting (1; 101; 201; 301; 401) according to any one of the preceding claims, wherein the tank is attached to a structural member (78) of the aircraft or spacecraft (91) using the crash-load absorbing attachment fitting (1; 101; 201; 301; 401).
